(19) Europäisches Patentamt / European Patent Office / Office européen des brevets

(11) **EP 4 517 367 A1**

(12) **DEMANDE DE BREVET EUROPEEN**

(43) Date de publication:
**05.03.2025 Bulletin 2025/10**

(21) Numéro de dépôt: **24197111.8**

(22) Date de dépôt: **28.08.2024**

(51) Classification Internationale des Brevets (IPC):
**G01S 7/35** *(2006.01)* **G01S 13/34** *(2006.01)*
**G01S 13/42** *(2006.01)* **G01S 13/58** *(2006.01)*

(52) Classification Coopérative des Brevets (CPC):
**G01S 13/42; G01S 7/35; G01S 7/354;**
**G01S 13/343; G01S 13/347; G01S 13/584**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **29.08.2023 FR 2309053**

(71) Demandeur: **Commissariat à l'Energie Atomique et aux Energies Alternatives**
**75015 Paris (FR)**

(72) Inventeurs:
• **ZARUDNIEV, Mykhailo**
**38054 GRENOBLE CEDEX 09 (FR)**
• **OUVRY, Laurent**
**38054 GRENOBLE CEDEX 09 (FR)**

(74) Mandataire: **Brevalex**
**Tour Trinity**
**1 B Place de la Défense**
**92400 Courbevoie (FR)**

(54) **DISPOSITIF DE MESURE RADAR À PLUSIEURS VOIES DE TRANSMISSION UTILISANT UNE DISTRIBUTION DANS L'ESPACE TEMPS-FRÉQUENCE**

(57) L'invention concerne un dispositif de mesure radar (10) à modulation de fréquence et émission continue comportant :
- un générateur (11) configuré pour générer N premiers signaux radars périodiques (20), la fréquence de chacun desdits premiers signaux radars périodiques varie linéairement en fonction du temps, dans une bande de fréquence B, sur des tronçons $T_x$ d'une partie $T_{trame}$ d'une période T, les fréquences desdits premiers signaux radars périodiques (20) étant différentes les unes des autres à chaque instant de la partie $T_{trame}$;
- N antennes d'émission (12),
- M antennes de réception (13), chaque antenne de réception étant configurée pour recevoir un signal comportant des échos (21) des premiers signaux radars périodiques;
- un circuit de réception (14) configuré pour :
o calculer, à partir des M signaux (22), une distance et/ou une vitesse radiale et/ou un angle, associé à un réflecteur détecté par le dispositif de mesure radar (10).

[Fig. 4]

EP 4 517 367 A1

**Description**

**Domaine technique de l'invention**

L'invention a pour objet les applications radar à plusieurs canaux de transmission et réception. L'invention concerne en particulier un dispositif de mesure radar formant un système d'émetteur-récepteur radar proposant, une mesure de distance, une mesure de position angulaire, une faible consommation d'énergie et un grand rapport signal sur bruit.

**Technique antérieure**

L'approche radar FMCW « Frequency Modulated Continuous Waveform » repose sur la transmission et la réception de signaux continus modulés en fréquence. Cette approche présente les avantages suivants par rapport aux approches radar de type UWB (« Ultra Wide Band ») qui repose sur la transmission d'impulsions :

- faible complexité de calcul, du fait que cette approche repose sur des convertisseurs à faible cadence d'échantillonnage ;
- simplicité de génération de formes d'ondes respectant un masque d'émission spectral tel qu'imposé par les standards radios ;
- faible puissance d'émission instantanée pour un rapport signal sur bruit équivalent.

L'approche radar FMCW permet de déterminer la distance entre un dispositif radar et un ou plusieurs réflecteurs. On entend par réflecteur, un objet réfléchissant l'onde radar. Cette approche permet également de déterminer la composante radiale d'une vitesse relative entre le dispositif radar et le réflecteur, notamment en utilisant l'effet doppler.

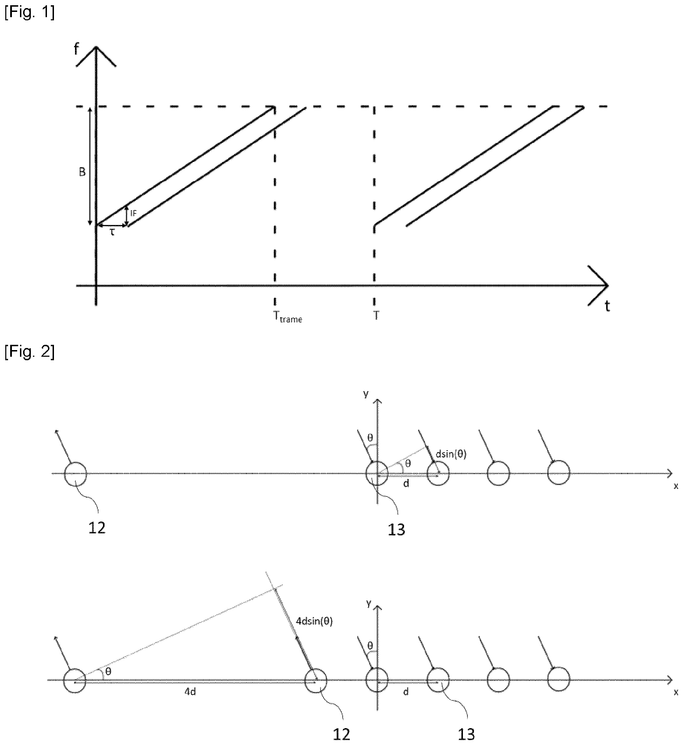

La [Fig. 1] est une représentation d'un exemple de signal radar périodique FMCW et d'un écho dans un graphique fréquence en fonction du temps. La fréquence du signal radar périodique FMCW augmente linéairement sur une bande de fréquence B pendant une durée $T_{trame}$. La fréquence du signal radar périodique FMCW évolue de manière périodique selon une période T. Après un temps de vol $\tau$ un écho du signal radar périodique FMCW est reçu. La fréquence de l'écho du signal radar périodique FMCW suit la même évolution que la fréquence du signal radar périodique FMCW. L'écart entre les fréquences instantanées du signal radar périodique FMCW et de son écho, noté IF, peut être déterminé notamment à l'aide d'une FFT (« Fast Fourrier Transform » ou transformée de Fourrier rapide) et permet de calculer le temps de vol $\tau$ et d'en déduire la distance entre le dispositif radar FMCW et le réflecteur à l'origine de l'écho considéré. La distance D en fonction du temps de vol est calculée de la manière suivante :

[Math. 1]

$$D = \frac{c \times \tau}{2}$$

c étant la vitesse de la lumière.

L'approche FMCW peut être utilisée conjointement avec une approche radar dite SIMO (« Single input multiple output ») ou une approche MIMO (« Multiple Input Multiple Output ») afin de déterminer, sans effectuer de balayage radar, un angle entre une direction d'un dispositif radar et une direction d'un réflecteur.

Les approches SIMO et MIMO utilisent la différence de phase, d'une même onde réfléchie par un réflecteur, entre plusieurs antennes réceptrices afin de déterminer cet angle aussi appelé AOA (« Angle Of Arrival »). Dans l'approche SIMO, la résolution angulaire, c'est-à-dire le plus petit écart pouvant être distingué entre les AOA de deux réflecteurs, est directement relié au nombre d'antennes réceptrices, par exemple un radar SIMO comportant quatre antennes réceptrices permet une résolution angulaire d'environ trente degrés alors qu'un radar SIMO comportant huit antennes réceptrices permet une résolution angulaire d'environ quinze degrés. Cependant, chaque antenne réceptrice nécessite une chaine de traitement dédiée, comportant notamment un LNA (« Low Noise Amplifier »), un mixer, un filtre et un ADC (« Analogue to Digital Converter »). L'augmentation de la résolution angulaire d'un radar SIMO se fait donc au détriment de la complexité, de l'encombrement due à la taille du réseau d'antennes et de la consommation du dispositif radar. Pour pallier à cette limitation, l'approche MIMO propose d'augmenter la résolution angulaire en augmentant le nombre d'antennes émettrices, par exemple, un dispositif radar MIMO comportant deux antennes émettrices et quatre antennes réceptrices permet une résolution angulaire d'environ 15 degrés. Cependant, cette approche nécessite de distinguer dans le signal reçu par une antenne réceptrice les ondes réfléchies, aussi appelées échos, issues de chaque antenne émettrice.

La [Fig. 2] est une représentation schématique d'un exemple de disposition d'antenne émettrice et réceptrice selon les approches SIMO et MIMO. Un angle θ est l'angle formé entre une direction y d'un dispositif de mesure radar SIMO ou MIMO et la direction d'un réflecteur, θ est l'AOA. La partie supérieure de la figure montre un exemple d'architecture SIMO composé d'une antenne émettrice et de 4 antennes réceptrices, chaque antenne réceptrice est séparée par une distance d. Le signal radar reçu par une antenne a parcouru une distance dsin(θ) supplémentaire par rapport à l'antenne réceptrice adjacente. Cette distance supplémentaire provoque un déphasage entre les signaux reçus par chacune des antennes émettrices. Ce déphasage pourra être déterminé à l'aide d'une FFT dite « angle FFT » et ensuite utilisé pour déterminer θ. La partie inférieure de la figure montre un exemple d'architecture MIMO composé de deux antennes émettrices et de 4 antennes réceptrices. Les deux antennes émettrices sont séparées par une distance 4d. Un écho du signal émis par la deuxième antenne émettrice aura donc parcouru une distance supplémentaire de 4dsin(θ) par rapport à un écho du signal émis par la première antenne émettrice.

Une manière de distinguer les échos issus des différentes antennes émettrices est appelée TDM (« Time Division Multiplexing »). Un dispositif radar TDM-MIMO émet une trame constituée de plusieurs créneaux temporels, chaque créneau temporel est émis par une antenne émettrice distincte, de cette manière les différentes antennes émettrices n'émettent pas simultanément et un écho reçu par une antenne réceptrice à un instant donné est issu de l'antenne émettrice entrain d'émettre à cet instant. Le temps de vol, c'est-à-dire la durée d'aller-retour de l'onde réfléchie par le réflecteur, étant généralement court par rapport à la durée d'un créneau temporel. Cette manière, appelée TDM, présente l'inconvénient de sous-utiliser la capacité de transmission d'un dispositif radar. En effet, seule une des antennes émettrices peut fonctionner à un instant donné. De manière supplémentaire, la trame émise par un dispositif radar TDM-MIMO doit être suffisamment longue pour contenir un créneau temporel pour chaque antenne émettrice ce qui limite la durée pendant laquelle le dispositif pourra être mis en veille entre deux cycles émission-réception. Cette limitation de la durée de veille augmente en conséquence la consommation du dispositif radar TDM-MIMO.

Une autre manière de distinguer les échos issus des différentes antennes émettrices consiste à moduler la phase du signal émis par chaque antenne émettrice, un exemple de cette manière applicable à un dispositif radar MIMO comportant deux antennes émettrices est appelé BPM (« Binary Phase Modulation »). Dans cet exemple, la phase du signal émis par la deuxième antenne émettrice est décalée de 180° par rapport à la phase du signal émis par la première antenne émettrice. Cette manière permet à un dispositif radar MIMO d'émettre simultanément sur chacune de ses antennes, différents décalages de phase étant appliqués aux signaux émis par chaque antenne. Cependant cette manière présente l'inconvénient de subir beaucoup d'interférence entre les signaux émis par chaque antenne et des erreurs de démodulation de phase, la modulation de phase d'un signal étant souvent incorrectement interprété lors du traitement des signaux reçus. Les antennes émettrices d'un dispositif radar MIMO utilisant la modulation de phase sont donc souvent confondues les unes avec les autres lors du traitement des signaux reçus par les antennes réceptrices ce qui provoque une dégradation de la résolution angulaire et de la résolution en distance d'un tel dispositif.

**Présentation de l'invention**

La présente invention remédie aux inconvénients précités en proposant un dispositif de mesure radar à modulation de fréquence et émission continue.

Ledit dispositif de mesure radar à modulation de fréquence et émission continue comporte :

- un générateur configuré pour générer N premiers signaux radars périodiques, N>1, la fréquence de chacun desdits premiers signaux radars périodiques varie linéairement en fonction du temps, dans une bande de fréquence B, sur des tronçons $T_x$ d'une partie $T_{trame}$ d'une période T, les fréquences desdits N premiers signaux radars périodiques étant différentes les unes des autres à chaque instant de la partie $T_{trame}$ ;
- N antennes d'émission, chaque antenne d'émission étant configurée pour émettre un des N premiers signaux radars périodiques ;
- M antennes de réception, M>1, chaque antenne de réception étant configurée pour recevoir un signal comportant des échos des premiers signaux radars périodiques ;
- un circuit de réception configuré pour :

   ○ recevoir M signaux, reçus respectivement par les M antennes de réception,
   ○ calculer, à partir des M signaux, au moins un paramètre associé à un réflecteur détecté par ledit dispositif de mesure radar, ledit paramètre étant soit une distance, soit une vitesse radiale, soit un angle.

On entend par réflecteur, par exemple un objet sur lequel les signaux radar sont réfléchis et dont on cherche à calculer la distance et/ou la vitesse radiale et/ou un angle avec le dispositif de mesure radar.

On entend par vitesse radiale, la composante de la vitesse relative du réflecteur par rapport au dispositif radar selon la direction formée par une droite passant par le réflecteur et le dispositif radar.

On entend par angle du réflecteur avec le dispositif radar, un angle, aussi appelé AOA, formé entre ladite direction et un axe caractéristique du dispositif radar.

On entend par « échos des premiers signaux radars périodiques », les signaux périodiques radars, au niveau des antennes de réception du dispositif de mesure radar, issues de la réflexion des premiers signaux radar périodiques sur le réflecteur.

On entend par un signal radar périodique dont la fréquence varie, un signal destiné à être émis par au moins une antenne d'émission d'un dispositif radar et dont la fréquence varie. La variation de cette fréquence est périodique selon la période T.

La partie $T_{trame}$ de la période T, ladite période T selon laquelle les fréquences des premiers signaux radars périodiques varient, est découpée en plusieurs tronçons. A l'intérieur de chaque tronçon, la valeur de la fréquence de chaque premier signal radar périodique varie linéairement.

De telles dispositions permettent au dispositif de mesure radar de mettre à contribution l'approche FMCW pour estimer la distance et/ou la vitesse radiale de un ou plusieurs réflecteurs tout en bénéficiant des avantages inhérents à cette approche.

De telles dispositions permettent au dispositif de mesure radar de mettre à contribution l'approche MIMO permettant une estimation de l'AOA tout en utilisant les différentes antennes émettrices simultanément. Les premiers signaux périodiques radars émis par chaque antenne émettrice ne provoqueront pas ou très peu d'interférence les uns avec les autres car la fréquence de chaque premier signal radar périodique est différente à chaque instant de la fréquence des autres premiers signaux radars périodiques. Les échos issus de chaque antenne émettrice seront également bien distincts les uns des autres ce qui permet une estimation précise de l'AOA.

Dans des modes particuliers de mise en oeuvre l'invention peut comporter en outre l'une ou plusieurs des caractéristiques suivantes, prises isolément ou selon toutes les combinaisons techniquement possibles.

Selon un mode de réalisation, pour chaque premier signal radar périodique lorsque la fréquence du premier signal radar périodique considéré, à la fin d'un des tronçons $T_x$, n'est pas une limite de la bande de fréquence B, la phase du premier signal radar périodique considéré, à la fin du tronçon $T_x$ considéré, est égale à la phase du premier signal radar périodique considéré au début d'un des autres tronçons $T_x$.

On entend par « limite de la bande de fréquence B », par exemple, lorsque la bande de fréquence B s'étend d'une fréquence $f_{min}$ à une fréquence $f_{max}$, B=[$f_{min}$ ; $f_{max}$], la fréquence $f_{min}$ ou la fréquence $f_{max}$.

On entend par « phase d'un signal périodique », la phase instantanée du signal périodique considéré. Dans le contexte d'une expression sinusoïdale du signal périodique, il s'agit de l'argument de la fonction sinus. Par contraste, la valeur de l'argument de la fonction sinus au début du signal (à t = 0), est appelée, dans le présent texte, la phase initiale.

Une telle disposition permet, après un réagencement des tronçons des échos des premiers signaux radars périodiques, une continuité de phase des échos des premiers signaux radars périodiques sur toutes les parties $T_{trame}$. Cette continuité de phase sur la partie $T_{trame}$ permet d'estimer la distance du réflecteur à l'aide d'une FFT (« Fast Fourrier Transform ») appliquée à toute la partie $T_{trame}$. La résolution en distance ainsi obtenue est c/2B, c étant la vitesse de la lumière et B la bande de fréquence FMCW.

On entend par résolution en distance, le plus petit écart de distance entre deux réflecteurs qui pourra être distingué par le dispositif de mesure radar.

Par contraste, en l'absence d'une continuité de phase entre les tronçons des premiers signaux radars périodiques, l'estimation de distance du réflecteur sera effectuée à l'aide de FFT appliquées à chaque tronçon $T_x$. La résolution en distance ainsi obtenue est de cX/2B, X étant le nombre de tronçon. La résolution en distance serait donc plus importante (ce qui correspond à une performance dégradée).

Selon un mode de réalisation, le générateur comporte N convertisseurs numériques analogiques, dits DACs, synchronisés.

Chaque DAC pourra en fonction d'un signal numérique, générer un signal analogique périodique à une fréquence distincte des signaux analogiques périodiques générés par les autres DACs. Les DACs étant synchronisés ils pourront également générer des signaux analogiques périodiques en accord de phase. Lesdits premiers signaux radars périodiques pourront être générés à l'aide des DACs.

Selon un mode de réalisation, le générateur comporte N modulateurs polaires chaque modulateur polaire étant configuré pour générer un signal à partir duquel un desdits premiers signaux radars périodiques est généré.

Chaque modulateur polaire pourra assurer un décalage en fréquence du signal qu'il génère ce qui permet de faire en sorte que la fréquence de chaque premier signal radar périodique soit différentes de la fréquence des autres premiers signaux radars périodiques à chaque instant de la partie $T_{trame}$. Le signal généré par chaque modulateur polaire pourra être utilisé en entrée, par exemple, d'un multiplexeur qui générera en sortie un desdits premiers signaux radars périodiques.

Selon un mode de réalisation le circuit de réception comporte N × M mélangeurs, chaque mélangeur étant configuré pour effectuer un mélange hétérodyne d'un des M signaux avec un parmi N deuxièmes signaux radars périodiques, chaque deuxième signal radar périodique étant généré à partir d'un desdits N premiers signaux radars périodiques.

On entend par « mélange hétérodyne », le mélange effectué par, par exemple, un mixeur, qui produit à partir de deux signaux de fréquences respectives $f_1$ et $f_2$ et de phases initiales respectives $\varphi_1$ et $\varphi_2$, un signal formé de plusieurs composantes dont notamment une composante de fréquence $f_3 = f_1 - f_2$ et de phase initiale $\varphi_3 = \varphi_1 - \varphi_2$. En considérant que chaque deuxième signal radar périodique est un des premiers signaux périodiques et que à chaque premier signal radar périodique correspond un deuxième signal radar périodique. Le signal en sorti de chaque mélangeur pourra être, par exemple, filtré à l'aide d'un filtre passe bas pour ne conserver que la composante de fréquence $f_3 = f_1 - f_2$ et de phase initiale $\varphi_3 = \varphi_1 - \varphi_2$. Cela permet d'obtenir facilement l'écart fréquentiel, aussi appelé fréquence de battement, noté IF, entre un premier signal radar périodique et son écho. Cet IF est directement proportionnel au temps de vol, noté $\tau$, et donc à la distance entre le dispositif de mesure radar et le réflecteur. La phase initiale du signal issu de chaque mélangeur permettra également de déterminer l'AOA du réflecteur.

Selon un mode de réalisation, le deuxième signal périodique présente un retard temporel dit retard de focus, noté $R_{focus}$, par rapport au premier signal radar périodique à partir duquel le deuxième signal radar périodique est généré.

Le retard de focus $R_{focus}$, en étant configuré pour être proche du temps de vol $\tau$, permet de s'affranchir des effets de fenêtrage dont peuvent souffrir les dispositifs de mesure radar FMCW lorsque la distance avec le réflecteur augmente ou lorsque la durée $T_{trame}$ est réduite.

Selon un mode de réalisation, les N premiers signaux radars périodiques sont générés à partir d'un signal radar périodique de référence dont la fréquence varie linéairement dans la bande de fréquence B selon une période $T_{ref}$.

On entend par signal radar périodique de référence, un signal radar FMCW selon l'art antérieur. La période $T_{ref}$ pourra être égale à la période T ou alors la valeur de la période $T_{ref}$ pourra être égale à la valeur de la partie $T_{trame}$.

Des tronçons du signal radar périodique de référence pourront être utilisés pour générer les tronçons $T_x$ des premiers signaux radars périodiques, en utilisant des ordres d'agencement des tronçons du signal radar périodique de référence différents pour chaque premier signal radar périodique.

Selon un mode de réalisation, les N premiers signaux radars périodiques sont générés en appliquant au signal radar périodique de référence des décalages temporels.

En appliquant des décalages temporels au signal radar périodique de référence on génère des premiers signaux radar périodique avec des fréquences variant dans la bande B et dont les fréquences à chaque instant pourront être différentes en utilisant différent décalages temporels pour la génération de chaque premier signal radar périodique.

Selon un mode de réalisation, la période $T_{ref}$ de variation de la fréquence du signal radar périodique de référence est égale à la partie $T_{trame}$ et le premier signal radar périodique d'indice k, k étant un entier compris entre 1 et N, est généré en appliquant au signal radar périodique de référence un décalage temporel

[Math. 2]

$$D_k = (k-1) \times \frac{T_{trame}}{N}.$$

La durée de chaque tronçon $T_x$ est définie par la différence de chaque décalage temporel $D_k$ avec le décalage temporel d'indice précédent $D_{k-1}$.

Ce décalage temporel d'indice k, permet d'assurer que la durée de chaque tronçon $T_x$ soit équivalente à celle des autres tronçons $T_x$ et que l'écart entre les fréquences des premiers signaux radars périodiques à chaque instant soit maximal pour une bande de fréquence B utilisée.

Selon un mode de réalisation, une durée de chaque tronçon $T_x$ et une bande de fréquence couverte par chaque tronçon $T_x$ sont configurées selon un code d'agencement de tronçon.

L'utilisation d'un code d'agencement de tronçon pour configurer la durée et la bande de fréquence de chaque tronçon $T_x$ permet de générer les N premiers signaux radars périodiques en limitant les interférences potentielles avec d'autres signaux périodiques présents dans l'environnement du dispositif selon l'invention.

**Brève description des figures**

L'invention sera mieux comprise à la lecture de la description suivante, donnée à titre d'exemple nullement limitatif, et faite en se référant aux figures :

[Fig. 1] une représentation d'un exemple de signal radar périodique FMCW et d'un écho dans un graphique fréquence en fonction du temps,
[Fig. 2] une représentation schématique d'un exemple de disposition d'antenne émettrice et réceptrice selon les approches SIMO et MIMO,
[Fig. 3] une représentation d'un exemple de premiers signaux radars périodique et d'échos selon l'invention dans un graphique fréquence en fonction du temps,
[Fig. 4] une représentation schématique d'un exemple de dispositif de mesure radar selon l'invention,

[Fig. 5] une représentation schématique d'un exemple d'étapes de génération de premiers signaux périodiques radars selon l'invention.

Dans ces figures, des références identiques d'une figure à une autre désignent des éléments identiques ou analogues. Pour des raisons de clarté, les éléments représentés ne sont pas nécessairement à une même échelle, sauf mention contraire.

## Description détaillée de l'invention

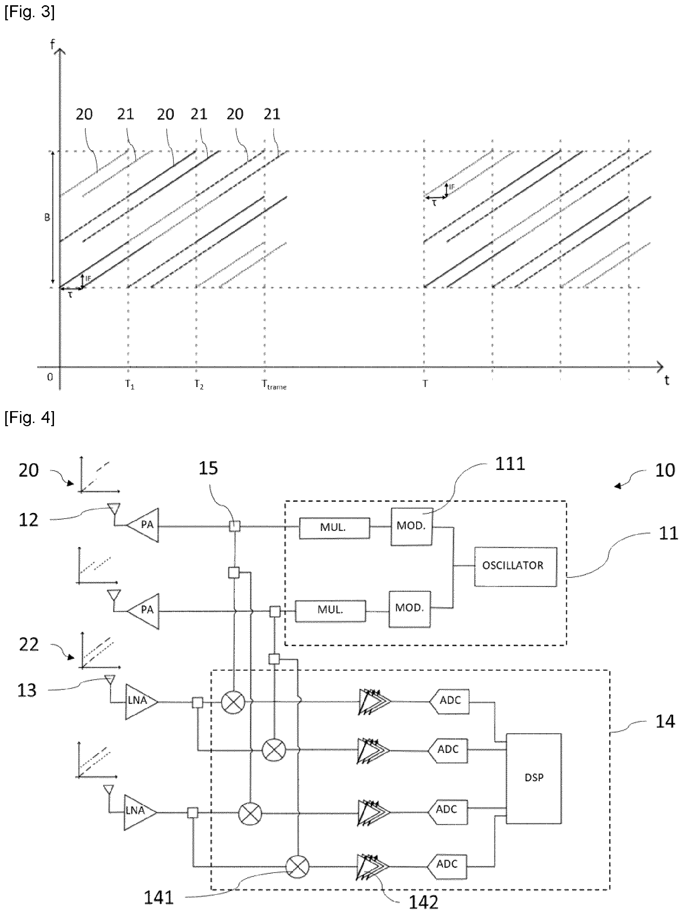

La [Fig. 3] est une représentation d'un exemple de premiers signaux radars périodiques 20 et d'échos 21 selon l'invention dans un graphique représentant la fréquence en fonction du temps. Dans cet exemple de réalisation, 3 premiers signaux radars périodiques 20 sont représentés. La fréquence de chaque premier signal radar périodique 20 évolue linéairement en fonction du temps, dans une bande de fréquence B, sur des tronçons $T_x$ (dans cet exemple N=3 et il y a 3 tronçons) d'une partie $T_{trame}$ d'une période T. Les premiers signaux radars périodiques 20 sont émis pendant la partie $T_{trame}$.

Chaque premier signal radar périodique 20 est émis par une antenne d'émission d'un dispositif de mesure radar 10 selon l'invention. Un réflecteur, réfléchi les premiers signaux radars périodiques 20 ce qui induit des échos 21 des premiers signaux radars périodiques. Le réflecteur pourra notamment être caractérisé par une surface équivalente radar. Chaque premier signal radar périodique 20 induit un écho 21 qui est reçu par des antennes de réception 13 du dispositif de mesure radar 10 selon l'invention, après un temps de vol $\tau$. Chaque antenne de réception 13 du dispositif radar 10 selon l'invention reçoit un signal 22, ce signal comporte les échos 21 de chaque premier signal radar périodique 20 provoqués par au moins un réflecteur.

La fréquence de chaque premier signal radar périodique 20 est différente des fréquences des autres premiers signaux radars périodique 20 à chaque instant de la partie $T_{trame}$. De cette manière, les premiers signaux radars périodiques 20 émis par chaque antenne d'émission 12 ne provoque pas d'interférences les uns avec les autres.

Le décalage de fréquence entre un premier signal radar périodique 20 et son écho 21, aussi appelé écart fréquentiel IF, permet de calculer une distance entre le dispositif de mesure radar et le réflecteur ayant provoqué l'écho 21 considéré.

Un circuit de réception 14 du dispositif radar 10 selon l'invention pourra, à partir d'au moins un signal 22 reçu par une antenne de réception 13, déterminer l'IF associé à un réflecteur et ensuite, à partir de cet IF, calculer la distance entre le dispositif de mesure radar et le réflecteur considéré. Plusieurs réflecteurs à des distances différentes provoqueront chacun un écho 21 avec un IF distinct, ce qui permettra de calculer la distance de chaque réflecteur.

De manière supplémentaire, après la réception des échos 21 des premiers signaux radars périodiques 20, l'écho 21 de chaque premier signal radar périodique 20 est distinct en fréquence des échos des autres premiers signaux radars périodiques 20. Le temps de vol $\tau$ étant considéré comme faible par rapport à la durée d'émission $T_{trame}$, l'écho 21 proche en fréquence d'un des premiers signaux radars périodiques 20 est l'écho 21 du premier signal radar périodique 20 considéré. Cela permet de distinguer, les uns des autres, les échos des premiers signaux radars périodique 20 émis par chaque antenne d'émission 12 du dispositif de mesure radar 10 selon l'invention. Le circuit de réception 14 du dispositif de mesure radar 10 selon l'invention pourra ensuite déterminer un déphasage entre les échos 21 des premiers signaux radars périodiques 20 émis par chaque antenne d'émission 12. On entend par déphasage, une différence de phase initiale.

Le circuit de réception pourra aussi déterminer un déphasage entre les signaux reçus par chaque antenne de réception.

De cette manière, le dispositif 10 selon l'invention peut mettre en oeuvre une architecture MIMO permettant de calculer l'AOA d'un réflecteur tout en exploitant toute la capacité d'émission du dispositif radar selon l'invention (chaque antenne émettrice émet simultanément).

De manière supplémentaire, lorsque la fréquence de chaque premier signal radar périodique 20 à la fin d'un tronçon $T_x$ ($T_1$ ou $T_2$ ou $T_{trame}$ sur la fig. 3) n'est pas la fréquence maximale de la bande de fréquence B, la phase du premier signal radar périodique considéré à la fin du tronçon $T_x$ considéré est égale à la phase du premier signal radar périodique 20 au début d'un des autres tronçons $T_x$. Cela permet, pour chaque écho de premier signal radar périodique, après un réagencement des tronçons, réalisé par exemple de manière numérique, de maintenir une continuité de phase de l'écho considéré sur la partie $T_{trame}$. On entend par phase, la phase instantanée d'un signal périodique. Dans le contexte d'une expression sinusoïdale du signal périodique, il s'agit de l'argument de la fonction sinus. Par contraste, la valeur de l'argument de la fonction sinus au début du signal (à t = 0), est appelée, dans le présent texte, la phase initiale. La continuité de phase entre les tronçons des premiers signaux radars périodiques 20 permet une continuité de phase sur la partie $T_{trame}$ des signaux 22 reçus par les antennes de réception. Ces signaux 22 pourront être directement ou indirectement (après une ou plusieurs transformation) traités grâce à une transformée de fourrier rapide « FFT » (« Fast Fourrier Transform ») sur l'ensemble de la partie $T_{trame}$ afin de déterminer des écarts fréquentiels IFs. En l'absence de cette continuité de phase sur la partie $T_{trame}$, des FFTs permettront de traiter la partir $T_{trame}$ tronçon par tronçon (chaque tronçon présentant une continuité de phase) ce qui dégrade la précision de détermination des IFs et donc dégrade la résolution en distance du dispositif de mesure radar.

Dans le cas N=3, les premiers signaux radars périodiques pourront, par exemple, être générés selon les équations suivantes :

[Math. 3]

$$s_1 = \begin{cases} \sin(2\pi((f_c - B/2)t + \alpha t^2)), \forall t \in [0, T_1) \\ \sin(2\pi((f_c - B/2)(t - T_1) + \alpha(t - T_1)^2)), \forall\, t \in [T_1, T_2] \\ \sin(2\pi((f_c - B/2)(t + T_1) + \alpha(t + T_1)^2)), \forall\, t \in [T_2, T_{trame}] \end{cases}$$

$S_1$ étant le premier signal radar périodique 20 d'indice 1 (représenté en trait plein sur la fig. 3), $f_c$ étant la fréquence centrale de la bande de fréquence B et $\alpha$ la pente de variation de la fréquence.

[Math. 4]

$$s_2 = \begin{cases} \sin(2\pi((f_c - B/2)(t - T_1) + \alpha(t - T_1)^2)), \forall t \in [0, T_1] \\ \sin(2\pi((f_c - B/2)(t + T_1) + \alpha(t + T_1)^2)), \forall\, t \in [T_1, T_2] \\ \sin(2\pi((f_c - B/2)t + \alpha t^2)), \quad \forall\, t \in [T_2, T_{trame}] \end{cases}$$

$S_2$ étant le premier signal radar périodique 20 d'indice 2 (représenté en gros pointillés sur la fig. 3).

[Math. 5]

$$s_3 = \begin{cases} \sin(2\pi((f_c - B/2)(t - T_2) + \alpha(t - T_2)^2)), \forall t \in [0, T_1] \\ \sin(2\pi((f_c - B/2)t + \alpha t^2)), \forall\, t \in [T_1, T_2] \\ \sin(2\pi((f_c - B/2)(t + T_2) + \alpha(t + T_2)^2)), \quad \forall\, t \in [T_2, T_{trame}] \end{cases}$$

$S_3$ étant le premier signal radar périodique 20 d'indice 3 (représenté en petit pointillés sur la fig. 3).

La [Fig. 4] est une représentation schématique d'un exemple de dispositif de mesure radar 10 selon l'invention. Selon un mode de réalisation, un générateur 11 comporte, dans l'exemple représenté, N = 2 modulateurs polaires 111. Chaque modulateur polaire 111 génère un signal à partir duquel un premier signal radar périodique 20 est créé, par exemple, à l'aide d'un multiplexeur « MUL. » puis d'un amplificateur de puissance « PA ».

La fréquence de chaque signal généré par un des modulateurs polaires 111 est différente à chaque instant de la fréquence des signaux générés par les autres modulateurs polaires 111. De cette manière, la fréquence de chaque premier signal radar périodique 20 est différente à chaque instant de la fréquence des autres premiers signaux radars périodiques 20. Chaque premier signal radar périodique 20 est émis par au moins une antenne d'émission (une antenne d'émission par premier signal dans l'exemple représenté).

Selon un mode de réalisation non représenté, le générateur 111 comporte N convertisseurs numériques analogiques « DAC » (« Digital Analogue Converter »). Chaque premier signal 20 est généré à l'aide d'un convertisseur numérique analogique à partir d'un signal numérique.

Le dispositif de mesure radar 10 comporte également M = 2 (dans l'exemple représenté) antennes de réception. Chaque antenne de réception est configurée pour recevoir un signal 22 comportant, si un réflecteur est présent dans une zone de visibilité du radar, les échos des premiers signaux 20. Chaque signal 22 pourra, par exemple, être amplifié par un amplificateur à faible bruit « LNA » (« Low Noise Amplifier ») puis être mélangé selon un mélange hétérodyne par un mélangeur 141 avec un deuxième signal radar périodique généré à partir d'un des premiers signaux 20. Dans l'exemple représenté sur la [Fig. 4] chaque deuxième signal radar périodique est l'un des premiers signaux radars périodiques 20, issu d'un splitter 15, et à chaque premier signal 20 correspond un deuxième signal radar périodique. Le mélange hétérodyne permet de produire un signal mélangé comportant plusieurs composantes dont une de fréquence $f_3 = f_1 - f_2$ et de phase initiale $\varphi_3 = \varphi_1 - \varphi_2$. Les fréquences $f_1$ et $f_2$ et les phases initiales $\varphi_1$ et $\varphi_2$ étant respectivement les fréquences et les phases initiales du signal 22 et du deuxième signal radar périodique en entrée d'un des mélangeurs 141. Un filtre passe-bas 142 permettra d'isoler la composante de fréquence $f_3$ et de phase initiale $\varphi_3$ qui pourra ensuite être numérisée à l'aide d'un convertisseur analogique numérique ADC (« Analogue Digital Converter »). Le circuit de réception 14 du dispositif de mesure radar 10 comporte, par exemple, un processeur de signaux numérique DSP (« Digital Signal Processing ») configuré pour réaliser des FFT permettant de calculer la distance entre les réflecteurs et le dispositif de mesure radar et les AOA des réflecteurs.

Selon un mode de réalisation non représenté, le circuit de réception 14 peut ne pas comporter de mélangeur 141. Les signaux 22 reçus pourront être directement numérisés ainsi que les premiers signaux 20 et les écarts fréquentiels IFs déterminés sans mélange hétérodyne mais par traitement numérique uniquement. Un tel mode de réalisation présente cependant l'inconvénient de nécessiter des ADCs disposant d'une fréquence d'échantillonnage beaucoup plus importante afin de pouvoir numériser les signaux 22 directement sans perdre d'information utile.

Selon un mode de réalisation non représenté, chaque deuxième signal radar périodique présente un retard temporel $R_{focus}$ par rapport au premier signal 20 à partir duquel il est généré. Un dispositif de mesure radar tel que décrit dans la demande FR3125887 permet ce retard temporel et l'utilise, en le configurant pour être proche du temps de vol $\tau$, pour réduire les IFs (ce qui permet d'utiliser des ADCs avec des fréquences d'échantillonnages encore plus faible) et d'éviter des effets de fenêtrage (produisant des images fantômes de réflecteur) lorsque la distance entre le réflecteur et le dispositif est telle que le temps de vol $\tau$ est supérieur à la période T.

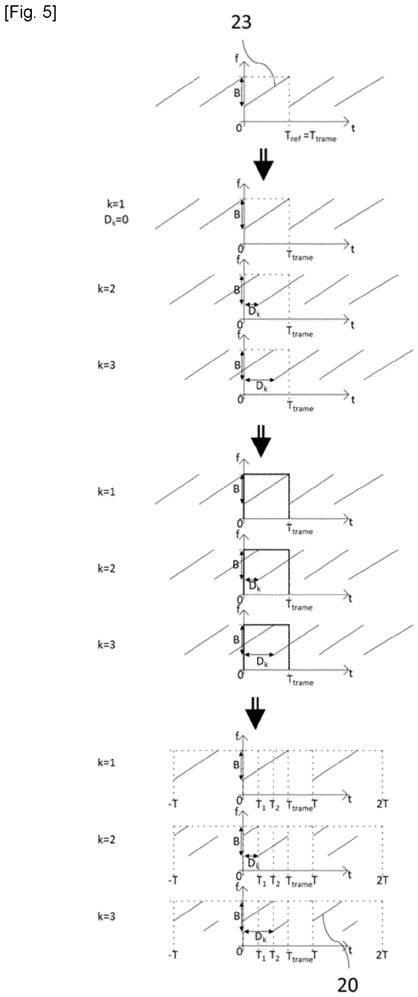

La [Fig. 5] est une représentation schématique d'un exemple d'étapes de génération de premiers signaux périodiques radars selon l'invention. Dans cet exemple, le dispositif de mesure radar 10 comporte au moins N=3 antennes d'émission. Un signal radar périodique de référence 23 est représenté, il s'agit d'un signal FMCW tel que présent dans l'art antérieur. La fréquence du signal radar périodique de référence varie linéairement dans la bande de fréquence B. La variation de la fréquence du signal radar périodique de référence 23 est périodique selon une période $T_{ref}$. Chaque tronçon $T_x$ des premiers signaux radars périodiques 20 pourra être généré à partir d'un tronçon du signal radar périodique de référence 23, par exemple, de manière numérique, lorsque les premiers signaux radars périodique 20 sont générés à l'aide de DACs.

Selon un mode de réalisation, des décalages temporels $D_k$ pourront être appliqués au signal radar périodique de référence 23 pour générer les premiers signaux radars périodique 20. Dans un exemple non représenté, la période $T_{ref}$ est égale à la période T et chaque tronçon $T_x$ est issu du signal radar périodique de référence 23 décalé d'un décalage temporel $D_k$ auquel est appliqué une fenêtre temporelle, aussi appelé porte, de largeur $T_x$ et débutant à l'instant de début du tronçon $T_x$ considéré. Chaque premier signal radar périodique pourra ensuite être constitué, à l'aide par exemple d'un commutateur, des différents tronçons $T_x$ générés à partir du signal radar périodique de référence 23. Cela permet de générer les premiers signaux radars périodiques 20 de manière à ce que leur fréquence soient différentes les unes des autres à chaque instant et de manière à ce que les signaux 22 formés par les échos 21 et reçus par les antennes de réception 13 du dispositif de mesure radar 10 présentent une continuité de phase sur la partie $T_{trame}$ de la période T.

Selon un mode de réalisation représenté sur la [Fig. 5], $T_{ref} = T_{trame}$. C'est-à-dire que la durée de la période $T_{ref}$ de variation de la fréquence du signal radar périodique de référence 23 est égale à la durée de la partie $T_{trame}$ de la période T des premiers signaux radars périodiques 20. Le premier signal radar périodique d'indice k, k étant un entier compris entre 1 et N, est généré à partir du signal radar périodique de référence 23 auquel est appliqué un décalage temporel

[Math. 2]

$$D_k = (k-1) \times \frac{T_{trame}}{N}.$$

Une fois le décalage temporel appliqué, un fenêtrage temporel de largeur $T_{trame}$ et débutant au début de la partie $T_{trame}$ permet de générer un signal intermédiaire de durée $T_{trame}$. Le signal intermédiaire est ensuite répété selon la période T pour former le premier signal radar périodique 20 d'indice k. Cette manière de générer les premiers signaux radar périodique 20 permet notamment une durée égale pour chaque tronçon $T_x$. Cette manière permet également, pour une bande de fréquence B donnée, un écart maximal entre la fréquence à chaque instant d'un premier signal radar périodique 20 avec la fréquence des autres premiers signaux radars périodiques 20. Disposer d'un écart maximal entre les fréquences à chaque instant des premiers signaux radar périodique permet de limiter au maximum les interférences entre les premiers signaux périodiques 20 lors de leurs émissions simultanées.

Selon un mode de réalisation, une durée de chaque tronçon $T_x$ et une bande de fréquence couverte par chaque tronçon $T_x$ sont configurées selon un code d'agencement de tronçon.

On entend par code d'agencement de tronçon, un ou plusieurs signaux numériques ou analogiques comportant des informations représentatives de la durée et de la bande de fréquence de chaque tronçon $T_x$.

L'utilisation d'un code d'agencement de tronçon pour configurer la durée et la bande de fréquence de chaque tronçon $T_x$ permet de générer les N premiers signaux radars périodiques par exemple en laissant une ou plusieurs parties de la bande de fréquence B non utilisées. Cela permet de limiter des interférences avec d'autres signaux périodiques, occupants cette ou ces parties de la bande de fréquence B, dans l'environnement du dispositif radar selon l'invention.

Dans un autre exemple, le code d'agencement de tronçon permettra de générer les N premiers signaux radars périodiques de façon à limiter la moyenne d'interférences destructrices subies par les premiers signaux radars périodiques.

Le code d'agencement de tronçon pourra, par exemple, être utilisé pour configurer la génération des N premiers signaux radar périodiques par les modulateurs polaires ou par les DACs.

## Revendications

1. Dispositif de mesure radar (10) à modulation de fréquence et émission continue comportant :

   - un générateur (11) configuré pour générer N premiers signaux radars périodiques (20), N>1, la fréquence de chacun desdits premiers signaux radars périodiques varie linéairement en fonction du temps, dans une bande de fréquence B, sur des tronçons $T_x$ d'une partie $T_{trame}$ d'une période T, les fréquences desdits N premiers signaux radars périodiques (20) étant différentes les unes des autres à chaque instant de la partie $T_{trame}$;
   - N antennes d'émission (12), chaque antenne d'émission étant configurée pour émettre un des N premiers signaux radars périodiques (20);
   - M antennes de réception (13), M>1, chaque antenne de réception étant configurée pour recevoir un signal comportant des échos (21) des premiers signaux radars périodiques;
   - un circuit de réception (14) configuré pour :

      ◦ recevoir M signaux (22), reçus respectivement par les M antennes de réception (13),
      ◦ calculer, à partir des M signaux (22), au moins un paramètre associé à un réflecteur détecté par ledit dispositif de mesure radar, ledit paramètre étant soit une distance, soit une vitesse radiale, soit un angle,

   dans lequel, pour chaque premier signal radar périodique, lorsque la fréquence du premier signal radar périodique (20) considéré, à la fin d'un des tronçons $T_x$, n'est pas une limite de la bande de fréquence B, la phase du premier signal radar périodique (20) considéré à la fin du tronçon $T_x$ considéré est égale à la phase du premier signal radar périodique (20) considéré au début d'un des autres tronçons $T_x$.

2. Dispositif de mesure radar (10), selon la revendication 1, dans lequel une durée de chaque tronçon $T_x$ et une bande de fréquence couverte par chaque tronçon $T_x$ sont configurées selon un code d'agencement de tronçon.

3. Dispositif de mesure radar (10) selon l'une des revendications précédentes dans lequel le générateur (11) comporte N convertisseurs numériques analogiques, dits DACs, synchronisés.

4. Dispositif de mesure radar (10), selon l'une quelconque des revendications 1 à 2, dans lequel le générateur (11) comporte N modulateurs polaires (111) chaque modulateur polaire (111) étant configuré pour générer un signal à partir duquel un desdits premiers signaux radars périodiques (20) est généré.

5. Dispositif de mesure radar (10) selon l'une des revendications précédente dans lequel le circuit de réception (14) comporte $N \times M$ mélangeurs (141), chaque mélangeur (141) étant configuré pour effectuer un mélange hétérodyne d'un des M signaux avec un parmi N deuxièmes signaux radars périodiques, chaque deuxième signal radar périodique étant généré à partir d'un desdits N premiers signaux radars périodiques (20).

6. Dispositif de mesure radar (10) selon la revendication 5 dans lequel le deuxième signal périodique présente un retard temporel dit retard de focus, noté $R_{focus}$, par rapport au premier signal radar périodique (20) à partir duquel le deuxième signal radar périodique est généré.

7. Dispositif selon l'une des revendications précédentes dans lequel les N premiers signaux radars périodiques (20) sont générés à partir d'un signal radar périodique de référence (23) dont la fréquence varie linéairement dans la bande de fréquence B, selon une période $T_{ref}$.

8. Dispositif selon la revendication 7 dans lequel les N premiers signaux radars périodiques (20) sont générés en appliquant au signal radar périodique de référence (23) des décalages temporels.

9. Dispositif selon la revendication 8 dans lequel la période $T_{ref}$ de variation de la fréquence du signal radar périodique de référence (23) est égale à la partie $T_{trame}$ et dans lequel le premier signal radar périodique (20) d'indice k, k étant un entier compris entre 1 et N, est généré en appliquant au signal radar périodique de référence (23) un décalage

temporel $D_k = (k-1) \times \frac{T_{trame}}{N}$ .

[Fig. 1]

[Fig. 2]

[Fig. 3]

[Fig. 4]

[Fig. 5]

Europäisches Patentamt
European Patent Office
Office européen des brevets

# RAPPORT DE RECHERCHE EUROPEENNE

Numéro de la demande

EP 24 19 7111

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/233076 A1 (CHEN CHULONG [US] ET AL) 23 juillet 2020 (2020-07-23) * alinéas [0048], [0051], [0054], [0062]; figures 3, 7, 8, 21 * | 1-9 | INV. G01S7/35 G01S13/34 G01S13/42 G01S13/58 |
| A | EP 4 016 126 A1 (NXP USA INC [US]) 22 juin 2022 (2022-06-22) * alinéa [0019] * | 6 | |
| A | FR 3 125 887 A1 (COMMISSARIAT ENERGIE ATOMIQUE [FR]) 3 février 2023 (2023-02-03) * figures 5, 6 * | 4 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 10 janvier 2025 | Ferrara, Michele |

## ANNEXE AU RAPPORT DE RECHERCHE EUROPEENNE
## RELATIF A LA DEMANDE DE BREVET EUROPEEN NO.

EP 24 19 7111

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-01-2025

| Document brevet cité au rapport de recherche | Date de publication | Membre(s) de la famille de brevet(s) | Date de publication |
|---|---|---|---|
| US 2020233076 A1 | 23-07-2020 | DE 102020116318 A1<br>US 2020233076 A1 | 31-12-2020<br>23-07-2020 |
| EP 4016126 A1 | 22-06-2022 | EP 4016126 A1<br>US 2022196795 A1 | 22-06-2022<br>23-06-2022 |
| FR 3125887 A1 | 03-02-2023 | EP 4124886 A1<br>FR 3125887 A1<br>US 2023082258 A1 | 01-02-2023<br>03-02-2023<br>16-03-2023 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 3125887